# EUROPÄISCHE PATENTANMELDUNG

(11) **EP 2 947 598 A1**
(43) Veröffentlichungstag der Anmeldung: **25.11.2015**
(21) Anmeldenummer: 14169128.7
(22) Anmeldetag: 20.05.2014
(51) Int. Cl.: G06F 21/60, H04L 29/06

(54) **Verfahren zur sicheren Verarbeitung von vertraulichen Daten auf einer Recheneinheit**

(71) Anmelder: Secunet Security Networks Aktiengesellschaft, 45128 Essen (DE)
(72) Erfinder: Lindlbauer, Marc, 80335 München (DE); Mellinger, Günther, 85630 Grasbrunn (DE); Warich, Eyck, 51674 Wiehl (DE)
(74) Vertreter: Rohmann, Michael

(57) **Zusammenfassung**

Verfahren zur sicheren Verarbeitung von Daten auf einer insbesondere mobilen Recheneinheit (1), wobei die Recheneinheit (1) mit einer Nutzerschnittstelle (2) zur Übermittlung von Nutzerdaten verbunden ist, wobei die Recheneinheit (1) eine externe Kommunikationsschnittstelle (14) aufweist. In der Recheneinheit (1) werden zumindest ein unsicherer Bereich (3) und zumindest ein sicherer Bereich (4) eingerichtet, wobei in dem sicheren Bereich (4) zumindest eine sichere Anwendung (5) und in dem unsicheren Bereich (3) zumindest eine unsichere Anwendung (6) hinterlegt werden. Der sichere Bereich (4) ist gegen ein Auslesen und/oder einen Zugriff durch eine dem unsicheren Bereich (3) hinterlegte, unsichere Anwendung (6) geschützt. In einem Initialisierungsschritt wird ein Authentifikationsdatensatz (7) in dem sicheren Bereich (4) der Recheneinheit (1) abgelegt. Beim Ausführen der sicheren Anwendung (5) werden die Nutzerdaten zusammen mit zumindest einem Teil des Authentifikationsdatensatzes (7) dem Nutzer der Rechnereinheit mittels der Nutzerschnittstelle (2) mitgeteilt.

## Beschreibung

Die Erfindung betrifft ein Verfahren zur sicheren Verarbeitung von Daten auf einer insbesondere mobilen Recheneinheit, wobei die Recheneinheit mit einer Nutzerschnittstelle zur Übermittlung von Nutzerdaten verbunden ist, wobei die Recheneinheit eine externe Kommunikationsschnittstelle aufweist, wobei in der Recheneinheit zumindest ein unsicherer Bereich und zumindest ein sicherer Bereich eingerichtet werden, wobei in dem sicheren Bereich zumindest eine sichere Anwendung und in dem unsicheren Bereich zumindest eine unsichere Anwendung hinterlegt werden.

Verfahren der vorstehend genannten Art sind aus der Praxis grundsätzlich bekannt. Die Trennung einer Recheneinheit in einen sicheren Bereich und in einen unsicheren Bereich soll sicherstellen, dass sensible Daten (z. B. Passwörter) lediglich in dem sicheren Bereich der Recheneinheit gehandhabt bzw. verarbeitet werden können.

Problematisch wird es, wenn die Recheneinheit über die externe Kommunikationsschnittstelle mit anderen Recheneinheiten Daten austauscht. Hier ist zunächst unklar, ob es sich bei den empfangenen Daten um vertrauenswürdige Daten handelt. Beispielsweise ist bekannt, etwa beim Online-Banking, dass dem Nutzer zur Anzeige gebrachte Daten aus nicht vertrauenswürdigen Quellen stammen können. So kann dem Nutzer eine täuschend echt gestaltete Website angezeigt werden, auf der Nutzer zur Eingabe sensibler Daten, etwa in Form eines Passwortes, aufgefordert wird. Diese sensiblen Daten können dann, unbemerkt von dem Nutzer, missbräuchlich verwendet werden.

Die Vertrauenswürdigkeit kann aber beispielsweise mittels elektronischer Signaturen festgestellt werden. Es ist im Falle von nicht elektronisch signierten Daten möglich, ein Warnsignal an den Nutzer herauszugeben, so dass dieser weiß, dass es sich hier um nicht vertrauenswürdige Daten handelt. Allerdings ist die Recheneinheit von außen soweit manipulierbar, dass der Warnhinweis von den unsicheren Anwendungen unterbunden wird. Im Ergebnis sind somit elektronische Signaturen alleine nicht geeignet, eine sichere Nutzung der Recheneinheit zu gewährleisten.

Der Erfindung liegt daher das technische Problem zugrunde, ein Verfahren der eingangs genannten Art anzugeben, welches die Unterscheidbarkeit von sicheren und unsicheren Anwendungen erhöht und gleichzeitig einfach auszuführen ist. In der Folge sollen Manipulationen durch nicht autorisierte Dritte ausgeschlossen bzw. nachhaltig erschwert werden. Nicht zuletzt wird so die Vertrauenswürdigkeit erhöht.

Zur Lösung des technischen Problems lehrt die Erfindung ein Verfahren der eingangs genannten Art, das dadurch gekennzeichnet ist, dass der sichere Bereich gegen ein Auslesen und/oder einen Zugriff durch eine in dem unsicheren Bereich hinterlegte, unsichere Anwendung geschützt ist, dass in einem Initialisierungsschritt ein Authentifikationsdatensatz in dem sicheren Bereich der Recheneinheit abgelegt wird und dass beim Ausführen der sicheren Anwendung die Nutzerdaten zusammen mit zumindest einem Teil des Authentifikationsdatensatzes dem Nutzer der Recheneinheit mittels der Nutzerschnittstelle mitgeteilt werden.

Die Recheneinheit ist für den Nutzer interaktiv ausgestaltet und eine aus der Gruppe "Computer, Notebook, Netbook, Laptop, Personal Digital Assistant, Handy, Smartphone, Google Glasses" ausgewählte Komponente. Ganz grundsätzlich aber kommt darüber hinaus jede Recheneinheit infrage, welche dem Nutzer die Möglichkeit von Interaktion bietet. Interaktion wird als bidirektionale Kommunikation verstanden.

Der Begriff "Nutzerschnittstelle" meint Ein- und/oder Ausgabegeräte. Eingabegeräte sind z. B. Tasten, Tastaturen, Mäuse, Mikrofone und vieles mehr. Ganz grundsätzlich kommt hier jedes für Recheneinheiten denkbare Eingabegerät infrage. Ausgabegeräte sind z. B. Monitore oder Lautsprecher. Auch hier kommen ganz allgemein Geräte infrage, welche Daten an den Nutzer liefern. Schließlich können noch Ein- und Ausgabegeräte beispielsweise in der Form eines Touchscreens zusammenfallen. Es liegt auch im Rahmen der Erfindung, dass die Nutzerschnittstelle ein aus der Gruppe "Display, Monitor, Touchscreen, Audioeinheit, Vibrationsalarm" ausgewähltes Gerät umfasst. Die Nutzerschnittstelle kann darüber hinaus jeden menschlichen Sinn betreffen. Denkbar sind also auch taktile und olfaktorische Nutzerschnittstellen.

Nutzerdaten sind Datensätze sein, welche vom Nutzer gesendet bzw. empfangen werden. Hierunter fallen beispielsweise Passwörter einerseits und die Darstellung von Internetseiten andererseits.

Mit "Anwendung" sind auf der Recheneinheit installierte Programme (z. B. Apps), aber auch bloße interaktive Internetseiten, gemeint. "Anwendungen" sind Vorgänge, bei denen Daten wie auch immer verarbeitet werden.

Der Begriff "sichere Anwendung" meint auf der Recheneinheit installierte Programme sowie auf anderen Recheneinheiten installierte Programme, welche dem sicheren Bereich der Recheneinheit zugeordnet werden. Diese Zuordnung kann im Falle von auf der Recheneinheit installierten Programmen mittels einer Installation im sicheren Bereich geschehen. Im Falle von Programmen auf anderen Recheneinheiten (z. B. Internetseiten) kann die Zuordnung über elektronische Signaturen geschehen. Demzufolge sind unsichere Anwendungen gerade diejenigen Anwendungen, welche weder im sicheren Bereich installiert worden sind noch einen Ursprungsnachweis aufweisen.

Die Nutzerschnittstelle ist mit der Recheneinheit lediglich im Sinne einer funktionierenden Kommunikation verbunden. Dies umfasst Geräte, in welchen die Nutzerschnittstelle fest mit der Recheneinheit verbunden ist (z. B. Smartphones). Umfasst sind aber auch Geräte, bei denen Nutzerschnittstelle und Recheneinheit physikalisch voneinander getrennt sind (z. B. PC und Infrarottastatur).

Mit "Kommunikationsschnittstelle" sind beispielsweise gemeint Netzwerkkarten von PCs, Antennen von Mobilfunkgeräten (Smartphones/Tablets/Handys) samt zugehöriger Elektronik, Infrarotschnittstellen (z. B. Bluetooth) und dergleichen mehr. Darüber hinaus sind nicht abschließenderweise auch USB-Anschlüsse bzw. kombinierte USB-Funk-Anschlüsse zu nennen.

Gemäß einer Ausführungsform wird der Initialisierungsschritt ausgeführt, bevor die zumindest eine sichere Anwendung in dem sicheren Bereich hinterlegt bzw. gespeichert wird. Besonders bevorzugt wird der Initialisierungsschritt ausgeführt, wenn weder in dem sicheren Bereich noch in dem unsicheren Bereich eine vorzugsweise ausführbare Anwendung hinterlegt ist. Auf diese Weise wird ausgeschlossen, dass eine unautorisierte Veränderung des Authentifikationsdatensatzes beim Ablegen bzw. beim Speichern in dem sicheren Bereich in dem Initialisierungsschritt erfolgt.

Es ist möglich, dass der Initialisierungsschritt durch eine sichere Anwendung aktiviert wird. Gemäß einer Ausführungsform wird zunächst ein erster Initialisierungsschritt ausgeführt, wenn weder in dem sicheren Bereich noch in dem unsicheren Bereich eine Anwendung abgelegt ist. Zweckmäßigerweise wird durch eine sichere Anwendung ein weiterer Initialisierungsschritt aktiviert, beispielsweise wenn zumindest in dem sicheren Bereich zumindest eine sichere Anwendung abgelegt ist.

Vorteilhafterweise wird der Authentifikationsdatensatz von zumindest einer vorzugsweise persönlichen Information des Nutzers der Recheneinheit gebildet. Es liegt im Rahmen der Erfindung, dass die Information individuell durch den Nutzer bestimmbar ist. Bevorzugt ist der Authentifikationsdatensatz lediglich dem Nutzer bekannt, so dass lediglich durch den Nutzer überprüfbar ist, ob beim Ausführen einer sicheren Anwendung der Authentifikationsdatensatz an die Nutzerschnittstelle übermittelt wird. Dadurch, dass unsichere Anwendungen nicht auf den sicheren Bereich zugreifen können, wird im Rahmen der Erfindung ausgeschlossen, dass durch unsichere Anwendungen der Authentifikationsdatensatz zur Vortäuschung einer sicheren Datenverarbeitung an die Nutzerschnittstelle weitergeleitet wird. Der Authentifikationsdatensatz kann eine individuelle Frage samt zugehöriger Antwort und/oder eine Unterschrift und/oder eine Stimmprobe und/oder einen Fingerabdruck und/oder ein privates Foto oder dergleichen beinhalten. Darüber hinaus sind auch taktile und olfaktorische Authentifikationsdatensätze denkbar.

Es ist möglich, dass eine Vielzahl von Authentifikationsdatensätzen in dem sicheren Bereich hinterlegt werden, wobei die Authentifikationsdatensätze vorzugsweise in dem Initialisierungsschritt in dem sicheren Bereich hinterlegt werden. Gemäß einer Ausführungsform werden die Authentifikationsdatensätze in einem ersten Initialisierungsschritt in dem sicheren Bereich hinterlegt. Ist gemäß einer Ausführung in dem sicheren Bereich eine sichere Anwendung abgelegt, wird vorteilhafterweise für bevorzugt jede weitere, sichere Anwendung, die in dem sicheren Bereich abgelegt wird, ein weiterer Initialisierungsschritt ausgeführt. Es hat sich bewährt, dass jeder sicheren Anwendung, welche in dem sicheren Bereich abgelegt wird, ein Initialisierungsschritt zugeordnet wird.

Gemäß einer besonders bevorzugten Ausführungsform werden in dem sicheren Bereich eine Vielzahl von sicheren Anwendungen abgelegt, wobei jeder sicheren Anwendung vorzugsweise lediglich ein Authentifikationsdatensatz zugeordnet wird. Es hat sich bewährt, dass die den sicheren Anwendungen jeweils zugeordneten Authentifikationsdatensätze voneinander verschieden sind. Es ist möglich, dass ein Authentifikationsdatensatz für mehrere sichere Anwendungen bzw. für eine Gruppe von sicheren Anwendungen und/oder für alle sicheren Anwendungen verwendet wird.

Es empfiehlt sich, dass die Nutzerschnittstelle ein Display und/oder Tastatur und/oder ein Touchsreen und/oder ein Mikrofon und/oder einen Lautsprecher umfasst, weil damit die Kommunikation betreffend Authentifikation mit Rechnereinheiten besonders einfach ist. Wird eine sichere Anwendung zur Ausführung gebracht, wird dem Nutzer der der ausgeführten, sicheren Anwendung zugeordnete Authentifikationsdatensatz angezeigt. Auf diese Weise ist es dem Nutzer leicht möglich zu erkennen, ob es sich bei dem angezeigten Authentifikationsdatensatz um einen Authentifikationsdatensatz handelt, der in dem sicheren Bereich hinterlegt und der ausgeführten Anwendung zugeordnet ist. Einem Angreifer ist es beispielsweise nicht möglich, einen in dem sicheren Bereich abgelegten Authentifikationsdatensatz in eine gefälschte Website zu integrieren, da der zumindest eine in dem sicheren Bereich abgelegte Authentifikationsdatensatz für den Angreifer nicht auslesbar ist.

Gemäß einer ersten Ausführungsform sind der sichere Bereich und der unsichere Bereich in einer Hardware realisiert, wobei der sichere Bereich in der Hardware von dem unsicheren Bereich gekapselt ist. Beispielsweise ist die Hardware als ARM-basierter Prozessor ausgebildet. Der sichere Bereich ist bevorzugt in einer Trustzone (Secure World) angeordnet. Vorteilhafterweise ist der unsichere Bereich in einer Normal World der Hardware, insbesondere des Prozessors, angeordnet.

Gemäß einer zweiten Ausführungsform sind der sichere Bereich und der unsichere Bereich jeweils als Software, vorzugsweise als virtualisierte Umgebung realisiert, wobei der sichere Bereich gekapselt von dem unsicheren Bereich ist. Gemäß der zweiten Ausführungsform ist der sichere Bereich bzw. die Secure World in einer ersten Partition der virtuellen Umgebung realisiert, wobei zweckmäßigerweise der unsichere Bereich in einer zweiten Partition als Normal World in der virtualisierten Umgebung eingerichtet ist. Demzufolge ist es möglich, eine sichere Anwendung in Form einer sicheren Internetseite zu besuchen, um dort eine weitere sichere Anwendung herunterzuladen, durch welche ein sicherer Bereich auf der Recheneinheit erschaffen wird. Folglich kann der sichere Bereich auch nachträglich geschaffen werden und das erfindungsgemäße Verfahren erst ab einem beliebigen späteren Zeitpunkt im Lebenslauf einer Recheneinheit durchgeführt werden.

Es empfiehlt sich, dass beim Ausführen der sicheren Anwendung eine Übermittlung von Daten zwischen der unsicheren Anwendung und der externen Kommunikationsschnittstelle unterbrochen wird. Besonders bevorzugt wird die Nutzerschnittstelle und die externe Kommunikationsschnittstelle ausschließlich von einer sicheren Anwendung genutzt, sobald die sichere Anwendung zur Ausführung gebracht ist, wobei zweckmäßigerweise die Nutzung der Nutzerschnittstelle und der externen Kommunikationsschnittstelle durch eine unsichere Anwendung unterbrochen wird.

Gemäß einer Ausführungsform wird ein Ursprungsnachweis der von der externen Recheneinheit übermittelten Nutzerdaten mit einer ausgeführten, sicheren Anwendung durchgeführt. Durch die Überprüfung des Ursprungsnachweises wird festgestellt, dass die empfangenen Nutzerdaten von der durch die sichere Anwendung aufgerufenen, externen Recheneinheit stammen. Ein solcher Ursprungsnachweis ist beispielsweise eine elektronische Signatur.

Bevorzugt findet der Initialisierungsschritt vor einer Aktivierung der externen Kommunikationsschnittstelle statt. Die Aktivierung wird beispielsweise durch ein erstmaliges Einführen einer SIM-Karte ausgelöst und schützt den Nutzer bereits vor einer erstmaligen Nutzung der Kommunikationsschnittstelle. So ist, beispielsweise im Falle von Mobilfunkgeräten, sichergestellt, dass der Schutz durch den Authentifikationsdatensatz im Grunde schon vor Inbetriebnahme greift.

Es ist möglich, dass der Authentifikationsdatensatz nur in einer vertrauenswürdigen Umgebung angezeigt wird. Eine vertrauenswürdige Umgebung ist eine solche, welche z. B. dem alltäglichen Nutzungsprofil (GPS-Daten, Zeitpunkte der Nutzung, Nutzungsarten und dergleichen mehr) entspricht. Ein unberechtigter Zugriff auf den Authentifikationsdatensatz wird so erschwert.

Es liegt im Rahmen der Erfindung, dass in einem Ausführungsschritt beim Ausführen der sicheren Anwendung die unsichere Anwendung von der Nutzerschnittstelle getrennt bzw. lediglich durch die sichere Anwendung auf die Nutzerschnittstelle zugegriffen wird. Ein Mitprotokollieren durch eine unsichere Anwendung wird so verhindert. Dies gilt sowohl für unsichere Anwendungen, welche zum Zeitpunkt des Zugriffs der sicheren Anwendung auf die Nutzerschnittstelle noch Zugriff auf die Nutzerschnittstelle hatten als auch für solche unsicheren Anwendungen, welche nach diesem Zeitpunkt Zugriff auf die Nutzerschnittstelle haben wollen. Dies kann beispielsweise über eine der sicheren Anwendung zuzuordnende hohe Zugriffspriorität erreicht werden.

Der Erfindung liegt die Erkenntnis zugrunde, dass sich das erfindungsgemäße Verfahren durch eine einfache Ausführbarkeit und hohe Sicherheit auszeichnet. Wesentlich dabei ist, dass auf der Recheneinheit zunächst ein sicherer Bereich geschaffen ist, der von außen durch einen Angreifer nicht manipulierbar ist. Wesentlich weiterhin ist, dass sichere Anwendungen exklusiv auf die Nutzerschnittstelle und/oder die Kommunikationsschnittstelle zugreifen, wodurch ein Konflikt bzw. Ausspionieren (z. B. phishing) der in der sicheren Anwendung gehandhabten Daten durch Anwendungen aus dem unsicheren Bereich ausgeschlossen ist. Dadurch, dass in dem sicheren Bereich abgelegte Anwendungen bezüglich der Nutzung der Nutzerschnittstelle und Kommunikationsschnittstelle ein Vorrecht besitzen, können bei der Nutzung der Nutzerschnittstelle und/oder der Kommunikationsschnittstelle keine Konflikte mit Anwendungen entstehen, die in dem unsicheren Bereich hinterlegt sind. Die Ablage mehrerer Authentifikationsdatensätze in dem sicheren Bereich versetzt den Nutzer in die Lage, unterschiedliche Anwendungen sicher anhand der Anzeige der jeweiligen Anwendung zugeordneten Authentifikationsdatensatzes zu identifizieren und die Manipulationsfreiheit festzustellen.

Sollte ein Dritter einen Angriff auf die Recheneinheit erfolgreich durchgeführt haben, ist dies vom Nutzer problemlos erkennbar, da der Angreifer ausschließlich den unsicheren Bereich angreifen und nicht auf die Authentifikationsdatensätze in dem sicheren Bereich zugreifen kann. Folglich können die Authentifikationsdatensätze beim Ausführen eines Schadprogramms nicht angezeigt werden. Durch das Fehlen der Anzeige des Authentifikationsdatensatzes wird der Nutzer also darauf hingewiesen, dass eine vermeintlich sichere Anwendung nicht ordnungsgemäß ausgeführt wird.

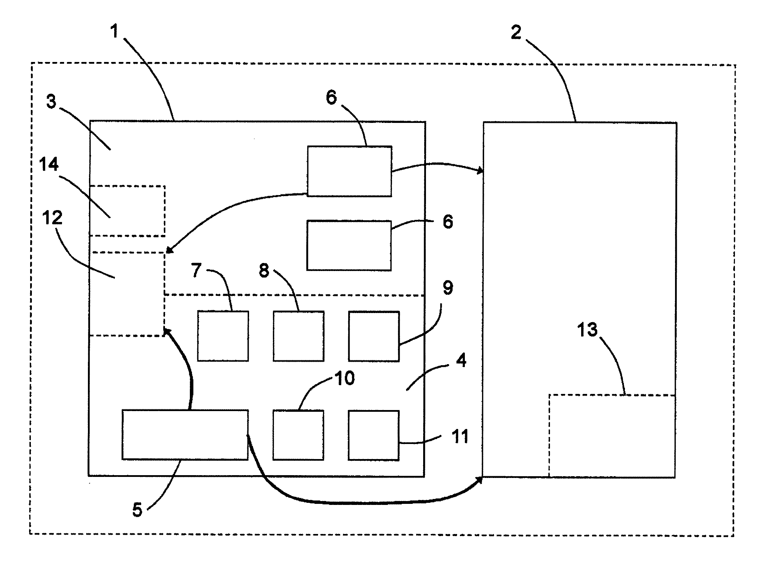

Nachfolgend wird die Erfindung anhand einer lediglich ein Ausführungsbeispiel darstellenden Zeichnung näher erläutert. Die einzige Figur der Zeichnung zeigt eine lediglich beispielhaft gemeinte Vorrichtung, welche dem erfindungsgemäßen Verfahren zugrunde liegt.

Eine solche Vorrichtung weist zunächst eine Recheneinheit 1 sowie eine Nutzerschnittstelle 2 auf, welche zumindest funktional miteinander verbunden sind. Die funktionale Verbindung ist als gestrichelte Linie um die Recheneinheit 1 und die Nutzerschnittstelle 2 dargestellt. Eine funktionale Verbindung ist zumindest in dem Sinne zu verstehen, dass Daten von der Recheneinheit 1 zur Nutzerschnittstelle 2 und/oder umgekehrt übertragen werden können. Hierunter fällt beispielsweise die funktionale Verbindung von Rechner und Monitor/Tastatur/Maus, welche bekanntlich auch kabellos ausgebildet sein kann. Ebenso gut ist aber eine funktionale Verbindung in dem Sinne zu verstehen, dass die Recheneinheit 1 sowie die Nutzerschnittstelle 2 baulich fest innerhalb eines Gerätes integriert sind. Hierunter fallen beispielsweise Mobilfunkgeräte, also etwa Handys, Tablets und Smartphones. Insbesondere wenn die Recheneinheit 1 und die Nutzerschnittstelle 2 nicht baulich fest miteinander verbunden sind, weisen die Recheneinheit 1 und die Nutzerschnittstelle 2 jeweils eine interne Kommunikationsschnittstelle 12 bzw. 13 auf, welche die Kommunikation zwischen der Recheneinheit 1 und der Nutzerschnittstelle 2 überhaupt erst ermöglichen. Dabei kann es sein, dass die interne Kommunikationsschnittstelle 13 der Recheneinheit 1 mit einer externen Kommunikationsschnittstelle 14 zusammenfällt. Dies ist beispielsweise bei USB-Anschlüssen der Fall, welche auch als Funkverbindungen genutzt werden können.

Die Recheneinheit 1 umfasst einen sicheren Bereich 4, welcher durch bestimmte Maßnahmen sicherer gemacht worden ist als der ungesicherte und damit unsichere Bereich 3. Im vorliegenden Beispiel entspricht der sichere Bereich 4 einer Trustzone eines ARM-basierten Prozessors. Demzufolge wurde die Einteilung in sicher und unsicher auf der Hardware basierend vorgenommen.

Innerhalb des unsicheren Bereiches 3 befindet sich wenigstens eine unsichere Anwendung 6. Die unsichere Anwendung 6 entspricht jeder beliebigen, nicht dem sicheren Bereich 4 zugeordneten Anwendung. Insbesondere kann es sich bei der unsicheren Anwendung 6 um eine kompromittierte Anwendung handeln, welche dem Nutzer einen Schaden zufügen kann. In diesem Beispiel handelt es sich bei der unteren unsicheren Anwendung 6 in der Figur um einen Browser, welcher eine gefälschte Online-Banking-Seite darstellt. Der Nutzer ist auf die genannte Seite gelangt, in dem er einem Verweis in einer entsprechend gefälschten E-Mail gefolgt ist. Eine unsichere Anwendung 6 kann aber auch in Form eines Trojaners vorliegen (obere unsichere Anwendung 6 in der Figur), welcher auf der Recheneinheit 1 installiert wurde. Der Trojaner kann unter anderem Zugriff haben auf die Kommunikationsschnittstellen 12, 13, 14 bzw. auf die Nutzerschnittstelle 2. Dies ermöglicht dem Trojaner ein Mitprotokollieren derjenigen Daten, welche über die Kommunikationsschnittstelle 12, 13, 14 bzw. über die Nutzerschnittstelle 2 fließen.

Der sichere Bereich 4 ist von dem unsicheren Bereich 3 insofern gekapselt, als dass Anwendungen aus dem unsicheren Bereich 3 nicht auf Komponenten des sicheren Bereichs 4 zugreifen können. Der sichere Bereich 4 weist als Komponenten die sicheren Anwendungen 5, 10, 11 sowie die Authentifikationsdatensätze 7, 8, 9 auf. In diesem Beispiel ist der Authentifikationsdatensatz 7 ein Foto aus dem persönlichen Umfeld des Nutzers. Authentifikationsdatensatz 8 liegt in Form einer vom Nutzer selbst ausgedachten individuellen Frage samt Antwort vor. Authentifikationsdatensatz 9 ist eine Unterschrift aus dem persönlichen Umfeld des Nutzers.

Die sichere Anwendung 5 ist in dem vorliegenden Ausführungsbeispiel ein Betriebssystem. Das Erscheinungsbild dieses Betriebssystems entspricht demjenigen des regulären Betriebssystems, so dass der Nutzer ein Hochfahren des sicheren Betriebssystems nicht merkt. Optional kann das Hochfahren des Betriebssystems einhergehen mit der Anzeige eines Authentifikationsdatensatzes 7, 8, 9, damit der Nutzer weiß, dass er sich ab jetzt im sicheren Bereich 4 befindet. Das sichere Betriebssystem hat in dem Ausführungsbeispiel dann einen ausschließlichen Zugriff auf die Nutzerschnittstelle 2 sowie auf die externe Kommunikationsschnittstelle 14 und kann etwaige Zugriffe von unsicheren Anwendungen, insbesondere von dem Trojaner, zurückweisen.

Die sicheren Anwendungen 10, 11 sind als echte Online-Banking-Seite bzw. echtes Händlerportal ausgebildet und eineindeutig den Authentifikationsdatensätzen 8, 9 zugeordnet. Beim Besuch dieser beiden Seiten werden Ursprungsnachweise beispielsweise in Form von elektronischen Signaturen von den sicheren Anwendungen 10, 11 an die Recheneinheit 1 gesandt. In diesem Fall sorgt das Betriebssystem des sicheren Bereichs 4 dafür, dass der sichere Bereich 4 einen ausschließlichen Zugang zu den Kommunikationsschnittstellen 12, 13, 14 und der Nutzerschnittstelle 2 hat. Dies schließt auch ein Mitprotokollieren von beispielsweise eingegebenen Passwörtern über die Nutzerschnittstelle 2 bzw. Kommunikationsschnittstellen 12, 13, 14 durch den Trojaner aus.

Gleichzeitig löst der Ursprungsnachweis der sicheren Anwendung 10 bzw. 11 eine Anzeige des jeweils zugeordneten Authentifikationsdatensatzes 8 bzw. 9 aus. Wird also die sichere Anwendung 10 in Form einer echten Online-Banking-Seite besucht, so wird der dazugehörige Authentifikationsdatensatz 8, beispielsweise in Form einer wiedergegebenen Unterschrift des Nutzers auf einem Monitor, angezeigt. Damit weiß der Nutzer automatisch, dass er sich auf einer sicheren Seite befinden muss, da die unsicheren Anwendungen 6 zu keinem Zeitpunkt in dem Lebenslauf der Vorrichtung Zugriff auf die Authentifikationsdatensätze 7, 8, 9 haben konnten.

Gelangt aber der Nutzer auf eine gefälschte Online-Banking-Seite, so empfängt die Recheneinheit 1 keine Ursprungsnachweise und es wird auch kein Authentifikationsdatensatz 8 beim Besuch der gefälschten Online-Banking-Seite angezeigt. Die Anzeige der Unterschrift des Nutzers unterbleibt. Obwohl die gefälschte Online-Banking-Seite dem Original exakt nachgebildet wurde, weiß der Nutzer sofort, dass es sich hier um eine gefälschte und für ihn damit gefährliche Seite handelt.

## Patentansprüche

1. Verfahren zur sicheren Verarbeitung von Daten auf einer insbesondere mobilen Recheneinheit (1), wobei die Recheneinheit (1) mit einer Nutzerschnittstelle (2) zur Übermittlung von Nutzerdaten verbunden ist, wobei die Recheneinheit (1) eine externe Kommunikationsschnittstelle (14) aufweist, wobei in der Recheneinheit (1) zumindest ein unsicherer Bereich (3) und ein sicherer Bereich (4) eingerichtet wird, wobei in dem sicheren Bereich (4) zumindest eine sichere Anwendung (5) und in dem unsicheren Bereich (3) zumindest eine unsichere Anwendung (6) hinterlegt werden, **dadurch gekennzeichnet, dass** der sichere Bereich (4) gegen ein Auslesen und/oder einen Zugriff durch eine in dem unsicheren Bereich (3) hinterlegte, unsichere Anwendung (6) geschützt ist, dass in einem Initialisierungsschritt ein Authentifikationsdatensatz (7) in dem sicheren Bereich (4) der Recheneinheit (1) abgelegt wird, und dass beim Ausführen der sicheren Anwendung (5) die Nutzerdaten zusammen mit zumindest einem Teil des Authentifikationsdatensatzes (7) dem Nutzer der Recheneinheit (1) mittels der Nutzerschnittstelle (2) mitgeteilt werden.

2. Verfahren nach Anspruch 1, **dadurch gekennzeichnet, dass** der Initialisierungsschritt ausgeführt wird, bevor die zumindest eine sichere Anwendung (5) in dem sicheren Bereich (4) hinterlegt bzw. gespeichert wird.

3. Verfahren nach einem der Ansprüche 1 oder 2, **dadurch gekennzeichnet, dass** der Initialisierungsschritt durch eine sichere Anwendung (5) aktiviert wird.

4. Verfahren nach einem der Ansprüche 1 bis 3, **dadurch gekennzeichnet, dass** der Authentifikationsdatensatz (7) von zumindest einer vorzugsweise persönlichen Information des Nutzers der Recheneinheit (1) gebildet wird.

5. Verfahren nach einem der Ansprüche 1 bis 4, **dadurch gekennzeichnet, dass** der Authentifikationsdatensatz (7) zumindest eine individuelle Frage samt zugehöriger Antwort und/oder eine Unterschrift und/oder Stimmprobe und/oder einen Fingerabdruck und/oder ein privates Foto beinhaltet.

6. Verfahren nach einem der Ansprüche 1 bis 5, **dadurch gekennzeichnet, dass** eine Vielzahl von Authentifikationsdatensätzen (7, 8, 9) in dem sicheren Bereich (4) hinterlegt werden, wobei die Authentifikationsdatensätze (7, 8, 9) vorzugsweise in dem Initialisierungsschritt in dem sicheren Bereich (4) hinterlegt werden.

7. Verfahren nach einem der Ansprüche 1 bis 6, **dadurch gekennzeichnet, dass** eine Vielzahl von sicheren Anwendungen (5, 10, 11) in dem sicheren Bereich (4) abgelegt wird und dass jeder sicheren Anwendung (5, 10, 11) ein Authentifikationsdatensatz (7, 8, 9) zugeordnet wird.

8. Verfahren nach Anspruch 7, **dadurch gekennzeichnet, dass** die den sicheren Anwendungen (5, 10, 11) jeweils zugeordneten Authentifikationsdatensätze (7, 8, 9) voneinander verschieden sind.

9. Verfahren nach einem der Ansprüche 1 bis 8, **dadurch gekennzeichnet, dass** die Nutzerschnittstelle (2) ein Display und/oder eine Tastatur und/oder ein Touchscreen und/oder ein Mikrofon und/oder einen Lautsprecher umfasst.

10. Verfahren nach einem der Ansprüche 1 bis 9, **dadurch gekennzeichnet, dass** der sichere Bereich (4) und der unsichere Bereich (3) in einer Hardware realisiert sind, wobei der sichere Bereich (4) in der Hardware von dem unsicheren Bereich (3) gekapselt ist.

11. Verfahren nach einem der Ansprüche 1 bis 9, **dadurch gekennzeichnet, dass** der sichere Bereich (4) und der unsichere Bereich (3) jeweils als Software, vorzugsweise als virtualisierte Umgebung realisiert sind, wobei der sichere Bereich (4) gekapselt von dem unsicheren Bereich (3) ist.

12. Verfahren nach einem der Ansprüche 1 bis 11, **dadurch gekennzeichnet, dass** beim Ausführen der sicheren Anwendung (5, 10, 11) eine Übermittlung von Daten zwischen der unsicheren Anwendung (6) und der externen Kommunikationsschnittstelle (14) unterbrochen wird.

13. Verfahren nach einem der Ansprüche 1 bis 12, **dadurch gekennzeichnet, dass** der Initialisierungsschritt vor einer Aktivierung der externen Kommunikationsschnittstelle (14) stattfindet.

14. Verfahren nach einem der Ansprüche 1 bis 13, **dadurch gekennzeichnet, dass** der Authentifikationsdatensatz (7, 8, 9) nur in einer vertrauenswürdigen Umgebung angezeigt wird.

15. Verfahren nach einem der Ansprüche 1 bis 14, **dadurch gekennzeichnet, dass** in einem Ausführungsschritt beim Ausführen der sicheren Anwendung (5) die unsichere Anwendung (6) von der Nutzerschnittstelle (2) getrennt bzw. lediglich durch die sichere Anwendung (5) auf die Nutzerschnittstelle (2) zugegriffen wird.
